# FASCICULE DE BREVET EUROPEEN

(11) **EP 0 695 601 B1**
(45) Date de publication et mention de la délivrance du brevet: **03.06.1998**
(21) Numéro de dépôt: 95401731.5
(22) Date de dépôt: 21.07.1995
(51) Int. Cl.: B23Q 1/26, F16C 29/04, F16N 15/00

(54) **Dispositif de guidage linéaire à grande vitesse**
Hochgeschwindigkeitslinearführung
High-speed linear guide device

(30) Priorité: 22.07.1994 FR 9409085
(43) Date de publication de la demande: 07.02.1996
(73) Titulaire: SEPRO ROBOTIQUE, F-85000 La Roche-Sur-Yon (FR)
(72) Inventeur: Mouezy, Roger, F-85000 La Roche sur Yon (FR)
(74) Mandataire: Kaspar, Jean-Georges

(56) Documents cités:
- EP-A- 0 269 559
- EP-A- 0 408 854
- CH-A- 680 841
- DE-A- 4 404 109
- DE-C- 556 101
- FR-A- 1 390 421
- FR-A- 2 527 965
- JP-A- 1 005 748
- US-A- 3 051 535
- US-A- 3 231 317
- US-A- 3 259 021
- US-A- 4 013 280
- US-A- 4 561 814
- PATENT ABSTRACTS OF JAPAN vol. 13 no. 273 (C-609) [3621] ,22 Juin 1989 & JP-A-01 066296 (NIPPON) 13 Mars 1989,

## Description

L'invention concerne un dispositif de guidage linéaire selon le prèambule de la revendication 1 et comme connû par exemple du document US-A-4.561.814.

Les dispositifs de guidage linéaire sont habituellement utilisés comme sous-ensembles de déplacement pour assurer le mouvement relatif de deux éléments de machines, notamment de machines robotisées d'équipements de transfert automatique ou d'alimentation de machines outils.

Les dispositifs de guidage linéaire de type connu se répartissent en trois familles principales: guidage par éléments glissants avec frottement métal sur métal ou métal sur plaque de friction, guidage par élément à circulation de billes, guidage par roulement de galets sur rail.

Les systèmes de guidage par éléments glissants ne permettent pas d'atteindre des vitesses relatives élevées, car la friction entre deux éléments en déplacement relatif et la consommation d'énergie correspondante augmentent rapidement lorsque l'on augmente la vitesse relative d'un élément par rapport à l'autre.

Les systèmes de guidage par élément à circulation de billes sont limités en vitesse relative en raison des frottements des billes sur les éléments de recyclage. En effet, dès que la vitesse relative entre deux éléments est notablement supérieure à 3 m par seconde, il existe un risque important de coincement des billes dans leur canal de recyclage, ce coincement conduisant rapidement à un blocage destructif de la cage à billes ou du rail de circulation correspondant.

Les systèmes de guidage par roulement de galets sur rail permettent d'atteindre des vitesses linéaires élevées de l'ordre de 8 m par seconde pour des montages mécaniques de bonne précision. Cependant, il est nécessaire de maintenir la pression de contact des galets sur le rail de guidage au voisinage d'une valeur prédéterminée pour la raison suivante : une pression de contact insuffisante provoque une friction entre les galets et le rail dans les phases d'accélération et dégrade les surfaces de contact du rail et des galets, une pression trop importante produit un coincement et une dégradation de l'état de surface du rail ou du galet. En raison de la difficulté à maintenir en permanence la pression de contact des galets sur le rail au voisinage d'une valeur prédéterminée, cette solution de guidage par roulement de galets sur un rail, qui semble à première vue simple à réaliser et économique à mettre en oeuvre, nécessite en réalité l'utilisation de techniques de précision en ce qui concerne la construction, le montage et le réglage lorsque l'on recherche des vitesses de déplacement élevées allant jusqu'à 8 m par seconde sur des courses de déplacement importantes de l'ordre de plusieurs mètres.

L'invention a pour but de remédier aux inconvénients de la technique connue, en fournissant un nouveau dispositif de guidage linéaire à grande vitesse, pouvant aller jusqu'à 10 mètres par seconde, sur des courses de déplacement importantes de l'ordre de plusieurs mètres.

L'invention a pour objet un dispositif de guidage linéaire, du type comportant un rail définissant une trajectoire de déplacement d'un ensemble mobile et des galets solidaires dudit ensemble mobile, les galets étant montés dans un bloc élastiquement déformable, de manière à appuyer les galets sur le rail en exerçant une pression de contact prédéterminée et sensiblement constante sur le rail de guidage, le bloc élastiquement déformable comportant au moins deux parties rigides reliées entre elles par un moyen formant charnière élastique, caractérisé en ce que le moyen formant charnière élastique comporte au moins une paroi de faible épaisseur constituant une zone de déformation et permettant un pivotement relatif entre lesdites deux parties rigides.

Selon d'autres caractéristiques de l'invention :
- le dispositif comporte en outre un moyen de réglage de la pression de contact des galets sur le rail de guidage;
- ledit moyen de réglage est un moyen élastique appliquant la force d'un ressort ou analogue audit bloc élastiquement déformable;
- le dispositif comporte un moyen de stabilisation en rotation dudit ensemble mobile autour de ladite trajectoire de déplacement;
- ledit moyen de stabilisation en rotation comporte des galets solidaires dudit ensemble mobile qui roulent sur un rail secondaire sensiblement parallèle audit rail définissant la trajectoire de déplacement de l'ensemble mobile;
- au moins une paire de galets est montée sur un support commun articulé sur ledit bloc à la manière d'un boggie;
- le dispositif comporte un moyen de graissage automatique des surfaces de contact entre galets et rail;
- ledit moyen de graissage automatique comporte un organe d'application élastique d'un bâtonnet de graisse dure sur ledit rail définissant la trajectoire de déplacement de l'ensemble mobile;
- le bâtonnet de graisse dure comporte un ou plusieurs inserts de préférence en matière fibreuse, régulant la consommation de graisse par frottement sur le rail;
- le bâtonnet comporte à son extrémité arrière, une couche graisseuse colorée mettant en évidence l'usure du bâtonnet par dépôt sur le rail d'une pellicule colorée facilement détectable à l'oeil.

L'invention sera mieux comprise grâce la description qui va suivre donnée à titre d'exemple non limitatif en références aux dessins annexés dans lesquels :
La figure 1 représente schématiquement une vue en coupe transversale par rapport au sens de déplacement d'un dispositif de l'art antérieur.
La figure 2 représente schématiquement une vue en coupe transversale par rapport au sens de déplacement d'un premier mode de réalisation de dispositif selon l'invention;
La figure 3 représente schématiquement une vue en coupe transversale par rapport au sens de déplacement d'un deuxième mode de réalisation d'un dispositif selon l'invention.
La figure 4 représente schématiquement une vue partielle en coupe transversale par rapport au sens de déplacement d'un autre mode de dispositif selon l'invention.
La figure 5 représente schématiquement une vue en coupe longitudinale selon la ligne V-V de la figure 4 d'un dispositif selon l'invention.
La figure 6 représente schématiquement une vue en coupe longitudinale selon la ligne VI-VI de la figure 4 d'un dispositif selon l'invention.
La figure 7 représente schématiquement une vue en perspective avec une coupe partielle d'un boîtier de dispositif selon l'invention.
les figures 8 à 10 représentent schématiquement des vues en coupe transversale par rapport au sens de déplacement de variantes de réalisation des dispositifs des figures 2 et 3.

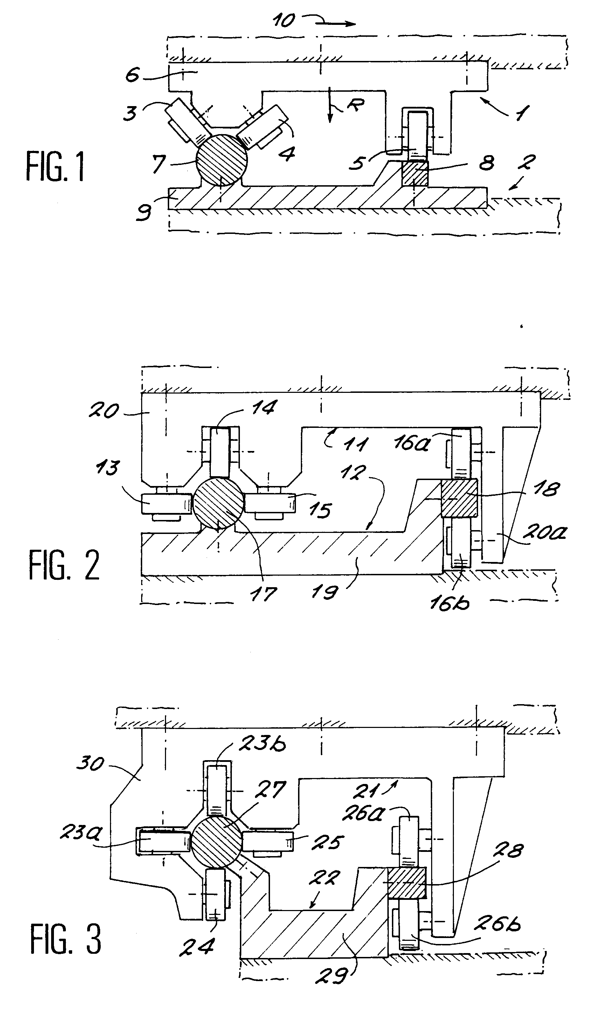

En référence à la figure 1, un ensemble mobile 1 de l'art antérieur déplaçable par rapport à un ensemble fixe 2 comporte des galets 3, 4 et 5 montés sur un bloc 6 et roulant respectivement sur un rail principal 7 définissant la trajectoire de déplacement de l'ensemble mobile 1 et sur un rail secondaire 8 constituant un moyen de stabilisation en rotation de l'ensemble mobile 1 autour de la trajectoire de déplacement définie par le rail principal 7.

Les galets 3, 4 et 5 sont montés en partie inférieure du bloc 6, tandis que les rails principal 7 et secondaire 8 sont solidaires d'un châssis de support 9.

Le dispositif de guidage représenté comporte, dans le cas d'un ensemble mobile 1 soumis à des efforts appliqués notamment entre les galets 4 et 5 et dont la résultante comporte une composante R appliquée entre les deux rails 7 et 8, une pluralité de galets disposés selon des lignes en nombre variable. A titre d'exemple le bloc 6 peut comporter une paire de galets 3, un seul galet 4 et un seul galet 5 dans le cas où les efforts appliqués à l'ensemble mobile 1 ferait chasser l'ensemble mobile 1 dans la direction allant du rail principal 7 vers le rail secondaire 8, c'est-à-dire dans le sens correspondant à la flèche 10.

En référence à la figure 2, un ensemble mobile 11 selon l'invention se déplace par rapport à un ensemble fixe 12 en étant guidé le long d'une trajectoire définie par le roulement de galets 13, 14, 15 sur un rail principal 17 et de galets 16a, 16b de part et d'autre d'un rail secondaire 18. Le rail principal 17 définissant la trajectoire de déplacement de l'ensemble mobile 11 et le rail secondaire 18 sont parallèles l'un à l'autre et montés solidaires d'une table fixe 19 de l'ensemble fixe 12. Le bloc élastiquement déformable 20 sur lequel sont montés les galets 13, 14, 15, 16a et 16b présentent une conformation 20a en équerre supportant les galets 16a et 16b roulant de part et d'autre du rail secondaire 18 formant un moyen de stabilisation en rotation autour de la trajectoire de déplacement définie par le rail principal 17.

Le dispositif selon l'invention comporte un bloc élastiquement déformable réalisé dans une matière rigide apte à supporter une légère déformation élastique; à titre de matériau utilisable, on peut citer les matériaux métalliques, les matériaux composites ou les matériaux synthétiques du genre "matières plastiques". Les blocs de dispositif selon l'invention sont de préférence réalisés à partir du matériau précité sous forme de profilés tronçonnables à longueur pour constituer un bloc de support de galets de longueur prédéterminée : pour réaliser ces profilés à partir d'un matériau précité, on utilise des procédés du genre : filage d'alliage léger d'aluminium, extrusion de matière plastique ou de matériau composite, etc.

Ce mode de fabrication fournit des profilés comportant des rainures allongées aptes à recevoir des galets de roulement et définissant des zones de déformation formant charnière élastique reliant deux parties rigides du bloc support de galets. La charnière élastique d'un bloc est constituée de préférence sous forme de paroi de faible épaisseur constituant une zone de déformation élastique qui permet un pivotement relatif entre deux parties rigides supportant chacune une ligne de galets de roulement. La fixation des galets et l'adaptation d'un tronçon de profilé au nombre de lignes de galets et au nombre de galets par ligne ne nécessitent que des usinages simples du genre perçage, taraudage ou alésage : la simplicité de ces usinages ne nécessitant pas de précision particulière permet ainsi d'envisager une fabrication automatique et économique de blocs supports de galets constituant des modules de guidage à 1, 2 ou 3 lignes de galets roulant sur un rail de guidage définissant une trajectoire de déplacement.

En référence à la figure 3, un autre dispositif selon l'invention comporte un ensemble mobile 21 déplaçable par rapport à un ensemble fixe 22. Des galets de roulement 23a, 23b, 24, 25, 26a, 26b se déplacent respectivement sur un rail 27 de section circulaire ou polygonale définissant une trajectoire de déplacement et de part et d'autre d'un rail 28 d'immobilisation en rotation. Ces rails 27 et 28 sont tous deux solidaires d'une table support 29 de l'ensemble fixe 22. Le montage des galets 23a, 23b, 24, 25, 26a et 26b sur le bloc 30 élastiquement déformable est réalisé de manière à contrôler la pression de contact des galets précités sur les rails 27 et 28 en maintenant sensiblement constamment une pression de contact prédéterminée sur ces rails et en maintenant constante la distance entre les axes de rotation de chaque paire de galets opposée l'un à l'autre par rapport à un rail de guidage, c'est-à-dire en maintenant constant l'entraxe des galets 23a et 25, des galets 23b et 24 ainsi que des galets 26a et 26b. A cet effet, on prévoit dans le bloc 30 une âme rigide assimilable à une équerre de référence supportant les galets 23a et 23b, âme rigide qui est reliée par des zones de faible épaisseur destinées, à se déformer élastiquement, aux supports des galets 24 et 25. En se déformant élastiquement, chaque zone de faible épaisseur constitue une charnière d'articulation permettant l'oscillation d'un support de galets 24 et 25 par rapport à l'âme rigide du bloc, ce qui assure un contact régulier et une constance de la pression de contact des galets 24 et 25 opposés aux galets 23b et 23a respectivement par rapport au rail de guidage 27.

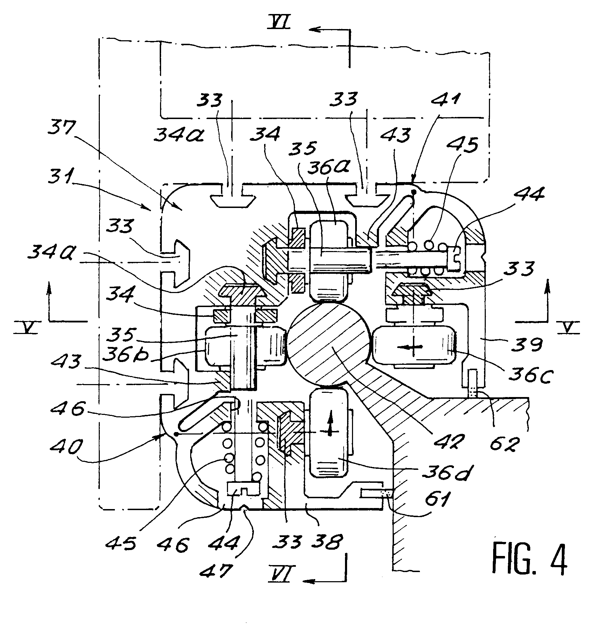

En référence aux figures 4, 5 et 6, un mode de réalisation préféré de invention comporte un bloc 31 réalisé par tronçonnage de profilé présentant une section constante, formant module de déplacement à l'aide de galets de roulement par rapport à un ensemble fixe 32. Le bloc 31 présente un contour extérieur sensiblement rectangulaire, dans lequel est prévu un nombre important de rainures 33 en forme de T. Les rainures en T permettent la fixation de plaques extérieures ou d'équerres représentées en traits interrompus ou reçoivent des extrémités 34a de guidage de plaques de support 34 dans lesquelles sont supportés les axes 35 de rotation des galets 36a à 36d.

Le bloc 31 permet ainsi la mise en place de quatre lignes de galets 36a, 36b, 36c et 36d. Le bloc 31 comporte une partie rigide présentant une structure renforcée 37 définissant une équerre constituant une référence de guidage et portant les deux galets de guidage principaux 36a et 36b. Les lignes de galets 36c opposées à 36b et 36d opposées à 36a sont supportées par des éléments de structure 38 et 39 du bloc 31 qui sont reliés à la partie 37 constituant une âme rigide par des zones de faible épaisseur 40 et 41. Chaque paroi 4O ou 41 de faible épaisseur fonctionne comme une charnière élastique et constitue une zone de déformation élastique qui permet un pivotement relatif entre les parties rigides 37 et 38 ou 37 et 39.

Une pression de contact des galets de roulements 36a à 36d sur le rail cylindrique ou polygonal 42 solidaire de l'ensemble fixe 32 est ainsi prédéterminée par le rapprochement ou l'éloignement des parties rigides 37 et 38 ou 37 et 39, ce rapprochement ou cet éloignement dépendant de la déformation d'une zone formant charnière élastique tel que 40 ou 41.

Le positionnement à l'équerre des surfaces de contact des galets 36a et 36b avec le rail 42 est obtenu grâce au fait que l'axe 35 de rotation d'un galet 36a ou 36b est maintenu d'une part par une rainure en T du genre 33 et appuyé d'autre part sur un épaulement ou un talon 43 venu de matière avec le bloc rigide 31, directement lors de la fabrication du profilé à partir duquel on fabrique le bloc 31 élastiquement déformable par un simple tronçonnage.

Pour régler précisément la pression de contact des galets 36c et 36d sur le rail 42, on prévoit de préférence un moyen de réglage simple tel qu'une vis 44 engagée dans un taraudage d'axe 35 de galet 36a ou 36b et communiquant une énergie élastique résultant par exemple de la compression d'un ressort 45 à chaque zone de déformation élastique 40 ou 41, de manière à écarter ou à rapprocher de manière élastique les parties rigides 37 et 38, ou 37 et 39. Ainsi, l'invention assure la mise en pression sous efforts contrôlés des galets 36a et 36d, 36b et 36c de part et d'autre du rail de guidage 42, et ceci de manière élastique, ce qui permet d'absorber les éventuelles irrégularités ou défauts de surface du rail 42 résultant d'une usure ou de chocs indésirables.

Pour permettre le réglage et le passage des vis de réglage 44, il suffit de réaliser deux perçages 46 dans l'axe d'une rainure 47 de positionnement en V venue de matière avec le profilé correspondant à la section du bloc 31.

Dans le cas de modules de déplacement guidés linéairement par un rail 42 et destinés à de fortes charges, les galets unitaires pourront être remplacés par des galets doublés 36a, 36b montés par paires sur des supports communs 50a, 50b articulés à rotation au moyen d'un axe 51a, 51b avec une partie rigide d'un bloc mobile 31. Cette articulation sur un support commun 50 à la manière d'un bogie permet de répartir la charge par moitié sur chaque galet de la paire. Egalement, sans sortir du cadre de la présente invention, les galets cylindriques peuvent être remplacés par des galets de forme adaptée au contour du rail de guidage et montés dans un bloc élastiquement déformable analogue au bloc décrit en référence aux figures 1 à 6.

De préférence, les zones de faible déformation formant charnière élastique (par exemple 40 ou 41) sont situées sensiblement dans le prolongement de l'axe de rotation des galets (tel que 36c et 36d de la figure 3) et aux extrémités de la configuration géométrique (bloc rigide 37 définissant une équerre) de référence de guidage du module de déplacement sur le rail correspondant. Cette disposition assure un déplacement réglable des galets 36c et 36d selon un mouvement de déplacement purement rotationnel et assure ainsi un contact constamment perpendiculaire du galet réglable 36c ou 36d sur le rail 42 sur lequel il applique une pression de contact prédéterminée.

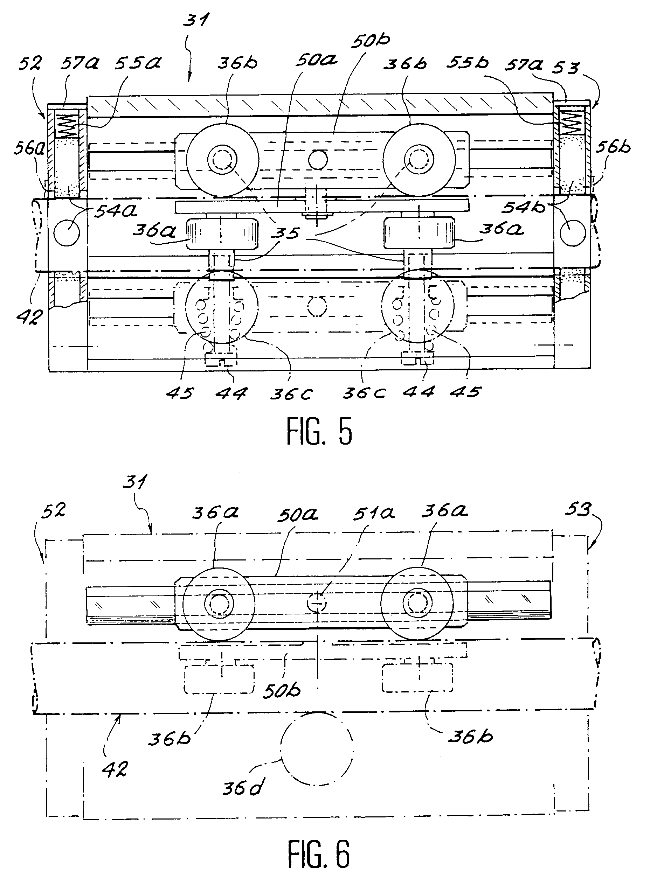

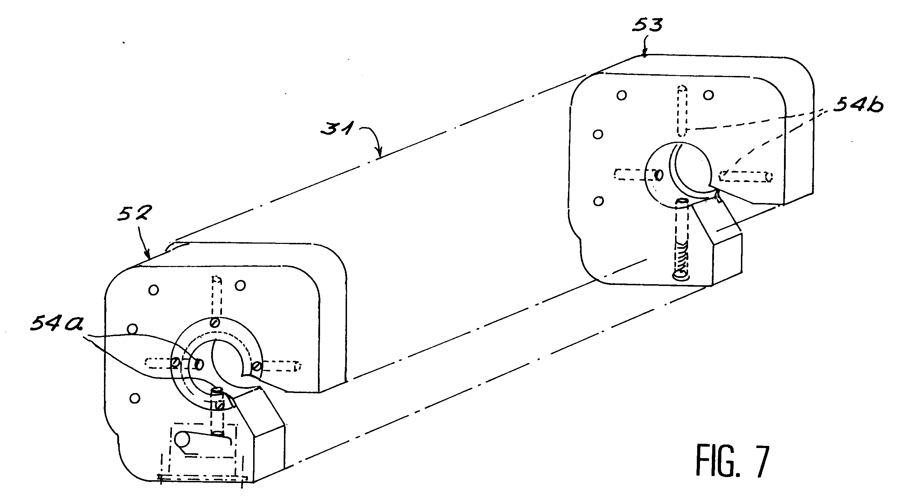

En référence aux figures 5 à 7, selon une variante préférée de l'invention, le dispositif comporte un moyen de graissage automatique des surfaces de contact entre galets et rail.

A cet effet, on prévoit de fixer à chaque extrémité d'un bloc 31 des plaques de fermeture 52, 53 faisant office de couvercle et comportant au niveau de chaque ligne de galets 36a à 36d des moyens de distribution de lubrifiant ou de graisse : on peut par exemple utiliser un feutre imbibé d'huile et alimenté par système de distribution régulière d'huile, ce qui impose toutefois une régulation du débit du fluide de graissage de manière à éviter des égouttures d'huile susceptible de polluer ou d'endommager l'environnement immédiat d'une machine comportant un dispositif selon l'invention.

Dans le mode de réalisation représenté, on dépose sur chaque rail de guidage selon la ligne de contact géométrique d'un galet 36a à 36d sur le rail 42 une fine pellicule de graisse déposée régulièrement par frottement : à cet effet, un bâtonnet 54a, 54b présentant une composition cireuse est appliqué contre la surface de contact entre galet et rail en étant précontraint élastiquement par un ressort 55a, 55b ou moyen élastique équivalent.

Des essais ont montré que la consommation de bâtonnets de graisse est très faible et que la durée de vie de ces bâtonnets 54a, 54b est de l'ordre d'une année d'utilisation en service normal. La fabrication d'une plaque d'extrémité 52 ou 53 formant couvercle est réalisée de préférence par moulage en constituant indirectement des canaux de réception de bâtonnets de graisse 54a, 54b. Ces canaux 56a, 56b, sont obturés par des couvercles rapportés 57a, 57b portant directement un ressort 55a, 55b ou, alternativement obturant simplement des canaux précités, tandis que la fonction d'appui élastique sur le bâtonnet de graisse est assurée par un ressort de flexion indépendant qui applique le bâtonnet de graisse sur le rail. L'usure du bâtonnet est constatée par observation visuelle à travers une surface transparente, ou par détection automatique de la position basse d'un poussoir intermédiaire déplaçable avec le bâtonnet ou venant en contact avec le rail de guidage linéaire.

Suivant les conditions d'environnement (températures élevées, vibrations des structures), la quantité de graisse déposée par usure des bâtonnets frottants sur les rails peut devenir supérieure à la quantité strictement nécessaire pour obtenir la fonction rcherchée. Pour limiter la consommation et avoir une autonomie optimale, onpeut mettre en place dans la structure du bâtonnet des inserts en matière fibreuse (par exemple du bois ou des fibres synthétiques) dont la nature et les dimensions permettent de réguler la consommation de graisse, l'usure par frottement sur le rail desdits inserts étant insensible aux conditions d'environnement évoquées plus haut.

Ces organes régulateurs de consommation peuvent être facilement intégrés dans la structure des bâtonnets au moment du moulage de ces derniers. On peut en profiter poiur introduire à l'extrémité arrière des bâtonnets, sur quelques millimètres de longueur, une composition graisseuse fortement chargée en matière colorante qui déposera sur le rail une pellicule colorée facilement détectable à l'oeil pour indiquer la limite d'usure du bâtonnet graisseur, et la nécessité de procéder à son remplacement dans un délai de quelques jours.

Un joint de raclage 60 disposé sur le couvercle nettoie la surface de contact entre les galets et le rail avant graissage et chasse les corps étrangers et pollutions diverses susceptibles de recouvrir les surfaces de contact entre galets et rail.

De manière analogue, des joints ou éléments d'étanchéité 61, 62 sont prévus pour isoler complètement de l'extérieur l'espace correspondant à des contacts de roulement entre galets et rails, en enveloppant complètement le ou les rails de guidage et en isolant les parties de support de ces rails de guidage de l'extérieur. Les éléments d'étanchéité de type connu du genre joint à lèvre, brosse longitudinale, chicane à interstices multiples ou analogues peuvent être utilisés à cet effet.

Pour des applications particulières, ces éléments d'étanchéité permettent la mise en surpression du bloc étanche de guidage constitué (figure 4) par obturation à l'aide de couvercles d'extrémité intégrant le graissage des contacts entre galets et rails, ce qui évite tout risque de contamination chimique ou autre par pénétration à l'intérieur du bloc de guidage.

Les ensembles mobiles réalisés grâce à l'invention permettent d'obtenir, avec une excellente précision et une maîtrisa des capacités de charge, des déplacements guidés sur de grandes courses avec des vitesses de déplacement élevées, et ceci avec une excellente fiabilité, une fabrication et une mise en oeuvre économiques. L'invention décrite en référence a des modes de réalisation particuliers n'y est nullement limitée, mais couvre au contraire toute modification de forme et toute variante de réalisation dans le cadre de l'esprit de l'invention.

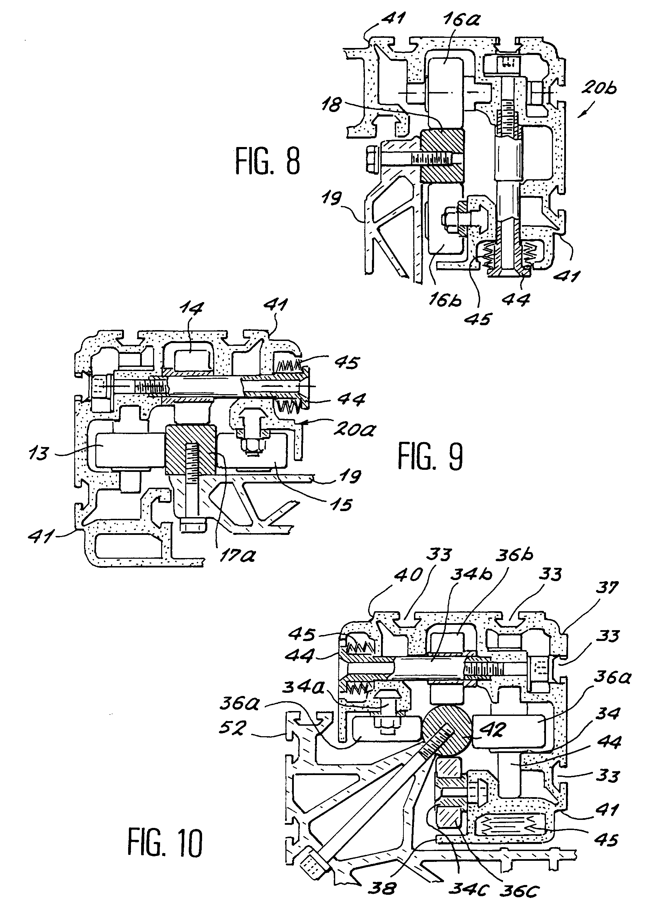

En référence aux figures 8 et 9, un premier dispositif antirotation à deux galets 16a, 16b est représenté en déplacement sur un rail 18 de section rectangulaire solidaire d'une poutre fixe 19, comme décrit en référence à la figure 2.

Les galets 16a, 16b sont montés sur un tronçon de profilé du type décrit en référence à la figure 4 et comportant deux zones 40 et 41 formant charnière élastique de déformation de manière à fournir une pression de contact prédéterminée par le réglage de la vis 44 comprimant un ensemble 45 de rondelles Belleville.

Dans l'exemple de montage à deux galets de la figure 8, seule la charnière élastique 41 est utilisée pour le réglage de la pression de contact prédéterminée des galets sur le rail.

Un deuxième dispositif de guidage à trois galets 13, 14, 15 est représenté sur un rail 17a de section rectangulaire solidaire d'un ensemble fixe 19.

Le réglage de la pression de contact est effectué de manière analogue par réglage à l'aide de la vis 44 agissant sur l'empilement de rondelles Belleville 45 de la déformation de la charnière élastique 41.

En référence à la figure 10, les éléments de repères identiques aux repères de la figure 4 désignent des éléments identiques ou fonctionnellement équivalents à ceux de la figure 4.

Les lignes de galets 36a à 36d sont dans cet exemple composées de galets individuels qui sont montées par un axe 34a formant tenon dans une rainure 33 formant mortaise, sur un palier 34b traversé par une vis 44 de réglage, sur un palier 34c solidaire d'une partie rigide et sur un palier 34d traversé par une autre vis de réglage.

L'équerre de référence de guidage est définie dans cet exemple par la partie rigide 37 portant les galets 36b et 36d, et les zones de faible épaisseur 40 et 41 formant charnière élastique sont utilisées toutes deux pour régler la pression de contact prédéterminée des galets sur le rail.

Ainsi, grâce à l'invention, il est possible d'utiliser la même section de profilé telle que représentée sur les figures 8, 9 et 10 pour effectuer le montage, soit de deux lignes de galets opposés (figure 8), soit de trois lignes de galets (figure 9), soit de quatre lignes de galets (figure 10). L'utilisation du même profilé pour les divers types de montage possibles permet une fabrication économique en grandes séries, les seuls usinages requis étant les perçages de mise en place des vis ou boulons de tensionnement et des ressorts ou moyens élastiques correspondants.

## Revendications

1. Dispositif de guidage linéaire, du type comportant un rail définissant une trajectoire de déplacement d'un ensemble mobile et des galets solidaires dudit ensemble mobile, les galets étant montés dans un bloc (20,30,31) élastiquement déformable, de manière à appuyer les galets (36a-36d) sur le rail (17,27,42) en exerçant une pression de contact prédéterminée et sensiblement constante sur le rail (17,27,42) de guidage, le bloc (31) élastiquement déformable comportant au moins deux parties rigides (37,38 ou 39) reliées entre elles par un moyen formant charnière élastique (40 ou 41) caractérisé en ce que le moyen formant charnière élastique comporte au moins une paroi (40 ou 41) de faible épaisseur constituant une zone de déformation et permettant un pivotement relatif entre lesdites deux parties rigides (37-38, 37-39).

2. Dispositif selon la revendication 1 caractérisé en ce que le dispositif comporte en outre un moyen de réglage (44, 45) de la pression de contact des galets sur le rail de guidage.

3. Dispositif selon la revendication 2 caractérisé en ce que ledit moyen de réglage est un moyen élastique (44, 45) appliquant la force d'un ressort (45) ou analogue audit bloc élastiquement déformable (31).

4. Dispositif selon l'une des revendications précédentes, caractérisé en ce que le dispositif comporte un moyen de stabilisation (16a, 16b, 18; 26a, 26b, 28) en rotation dudit ensemble mohile autour de ladite trajectoire de déplacement.

5. Dispositif selon la revendication 4 caractérisé en ce que ledit moyen de stabilisation en rotation comporte des galets (16a, 16b; 26a, 26b) solidaires dudit ensemble mobile qui roulent sur un rail secondaire (18, 28) sensiblement parallèle audit rail (17, 27) définissant la trajectoire de déplacement de l'ensemble mobile (1, 11, 21).

6. Dispositif selon l'une des revendications précédentes, caractérisé en ce qu'au moins une paire de galets (36a, 36b) est montée sur un support commun (50a, 50b) articulé (51a, 51b) sur ledit bloc (31) à la manière d'un boggie.

7. Dispositif selon l'une des revendications précédentes caractérisé en ce que le dispositif comporte un moyen de graissage automatique des surfaces de contact entre galets (36a, 36d) et rail (42).

8. Dispositif selon la revendication 7 caractérisé en ce que ledit moyen de graissage automatique comporte un organe (55a, 55b) d'application élastique d'un bâtonnet (54a, 54b) de graisse dure sur ledit rail (42) définissant la trajectoire de déplacement de l'ensemble mobile.

9. Dispositif selon la revendication 8 caractérisé en ce que le bâtonnet (54a, 54b) de graisse dure comporte un ou plusieurs inserts de préférence en matière fibreuse, régulant la consommation de graisse par frottement sur le rail (42).

10. Dispositif selon la revendication 8 caractérisé en ce que le bâtonnet (54a, 54b) comporte à son extrémité arrière, une couche graisseuse colorée mettant en évidence l'usure du bâtonnet par dépôt sur le rail (42) d'une pellicule colorée facilement détectable à l'oeil.

## Claims

1. A linear guiding device, of the type having a rail defining a displacement path for a movable assembly and rollers connected to the movable assembly, the rollers being mounted in a resiliently deformable unit (20,30,31), so as to apply the rollers (36a-36d) onto the rail (17,27,42) exerting a predetermined and substantially constant contact pressure on the guiding rail (17,27,42), the resiliently deformable unit (31) having at least two rigid portions (37,38 or 39) joined together by means forming a resilient joint (40 or 41), characterised in that the means forming the resilient joint has at least one wall (40 or 41) of small thickness constituting a deformation zone and permitting relative pivoting between the two rigid portions (37-38, 37-39).

2. A device according to Claim 1 characterised in that the device has, in addition, means (44,45) for adjusting the contact pressure of the rollers on the guide rail.

3. A device according to Claim 2, characterised in that the adjustment means is a resilient means (44,45) applying the force of a spring (45) or the like to the resiliently deformable unit (31).

4. A device according to one of the preceding Claims, characterised in that the device has means (16a,16b,18; 26a,26b,28) for stabilising the movable assembly in rotation about the displacement path.

5. A device according to Claim 4, characterised in that the rotational stabilisation means has rollers (16a,16b; 26a,26b) connected to the movable assembly which roll on a secondary rail (18,28) substantially parallel to the rail (17,27) defining the displacement path of the movable assembly (1,11,21).

6. A device according to one of the preceding Claims, characterised in that at least one pair of rollers (36a,36b) is mounted on a common support (50a,50b) articulated (51a,51b) on the unit (31) in the manner of a bogie.

7. A device according to one of the preceding Claims, characterised in that the device has means for automatically greasing the contact surfaces between rollers (36a,36d) and rail (42).

8. A device according to Claim 7, characterised in that the automatic greasing means has a member (55a,55b) for resiliently applying a stick (54a,54b) of hard grease onto the rail (42) defining the displacement path of the movable assembly.

9. A device according to Claim 8, characterised in that the stick (54a,54b) of hard grease has one or more inserts, preferably of fibrous material, regulating the consumption of grease by rubbing on the rail (42).

10. A device according to Claim 8, characterised in that the stick (54a,54b) has at its rear end a coloured greasy layer showing when the stick is worn by depositing on the rail (42) a coloured film which is easily visually detectable.

## Patentansprüche

1. Linearführung der Art mit einer Schiene, die eine Verschiebebahn für eine bewegliche Einheit festlegt, und mit Rollen, die an dieser beweglichen Einheit fest angebracht sind, wobei die Rollen in einem elastisch verformbaren Block (20,30,31) derart montiert sind, daß sie (36a-36d) auf der Schiene (17,27,42) abgestützt werden und dabei einen vorbestimmten und im wesentlichen konstanten Kontaktdruck auf die Führungsschiene (17,27,42) ausüben, und wobei der elastisch verformbare Block (31) wenigstens zwei starre Teile (37,38 oder 39) umfaßt, die miteinander über ein Mittel verbunden sind, das ein elastisches Scharnier (40 oder 41) ausbildet, **dadurch gekennzeichnet**, daß das ein elastisches Scharnier bildende Mittel zumindest eine Wand (40 oder 41) geringer Dicke umfaßt, die eine Verformungszone bildet und eine Relativverschwenkung zwischen den beiden starren Teilen (37-38,37-39) zuläßt.

2. Linearführung nach Anspruch 1, dadurch gekennzeichnet, daß sie ferner eine Einstelleinrichtung (44,45) zum Einstellen des Kontaktdrucks der Rollen auf der Führungsschiene aufweist.

3. Linearführung nach Anspruch 2, dadurch gekennzeichnet, daß die Einstelleinrichtung eine elastische Einrichtung (44,45) ist, welche die Kraft einer Feder (45) oder eine analoge Kraft auf den elastisch verformbaren Block (31) überträgt.

4. Linearführung nach einem der vorhergehenden Ansprüche, dadurch gekennzeichnet, daß sie eine Einrichtung (16a,16b,18;26a,26b,28) zur Drehstabilisierung der beweglichen Einheit um die Verschiebebahn umfaßt.

5. Linearführung nach Anspruch 4, dadurch gekennzeichnet, daß die Einrichtung zur Drehstabilisierung Rollen (16a,16b,26a,26b) aufweist, die an der Einheit fest angebracht sind und auf einer Sekundärschiene (18,28) abrollen, welche im wesentlichen parallel zu der die Verschiebebahn für die bewegliche Einheit (1,11,21) festlegenden Schiene (17,27) verläuft.

6. Linearführung nach einem der vorhergehenden Ansprüche, dadurch gekennzeichnet, daß wenigstens ein Paar Rollen (36a,36b) an einem gemeinsamen Support (50a,50b) montiert ist, der nach Art eines Fahrgestells an dem Block (31) angelenkt (51a,51b) ist.

7. Linearführung nach einem der vorhergehenden Ansprüche, dadurch gekennzeichnet, daß sie eine Einrichtung zum automatischen Schmieren der Kontaktflächen zwischen den Rollen (36a,36d) und der Schiene (42) aufweist.

8. Linearführung nach Anspruch 7, dadurch gekennzeichnet, daß die Einrichtung zur automatischen Schmierung ein Organ (55a,55b) zum elastischen Anlegen eines Hartschmiermittelstabes (54a,54b) gegen die die Verschiebebahn für die bewegliche Einheit festlegende Schiene (42) aufweist.

9. Linearführung nach Anspruch 8, dadurch gekennzeichnet, daß der Hartschmiermittelstab (54a,54b) eine oder mehrere Einlage(n), bevorzugt aus faserigem Material, aufweist, die den Schmiermittelverbrauch durch Reibung an der Schiene (42) reguliert/regulieren.

10. Linearführung nach Anspruch 8, dadurch gekennzeichnet, daß der Stab (54a,54b) an seinem hinteren Ende eine kolorierte Fettschicht aufweist, welche die Abnutzung des Stabes durch Abgabe eines kolorierten, leicht mit dem Auge feststellbaren Überzugs auf die Schiene (42) anzeigt.
